# EUROPEAN PATENT APPLICATION

(11) **EP 3 716 040 A1**
(43) Date of publication of application: **30.09.2020**
(21) Application number: 20159034.6
(22) Date of filing: 24.02.2020
(51) Int. Cl.: G06F 3/16, G06F 3/12

(54) **IMAGE FORMING APPARATUS AND JOB EXECUTION METHOD**

(30) Priority: 27.03.2019 US 201916365826
(71) Applicant: Toshiba Tec Kabushiki Kaisha, Shinagawa-ku Tokyo 141-8562 (JP)
(72) Inventor: Kudo, Yoichi, Tokyo, 141-8562 (JP)
(74) Representative: Hoffmann Eitle

(57) **Abstract**

According to one embodiment, an image forming apparatus includes a voice input unit and a control unit. The voice input unit inputs a voice uttered by a user. The control unit converts the voice inputted via the voice input unit into text data by voice recognition, and controls execution of a plurality of jobs based upon the text data and a single keyword, which is registered in advance, designating the plurality of jobs which are a combination of single jobs to be executed by an image forming apparatus.

## Description

### FIELD

Embodiments described herein relate generally to an image forming apparatus and a job execution method.

### BACKGROUND

In a related art, an image forming apparatus provides a simple operation that is easy to use even for a user such as a visually challenged person, an elderly person, and the like by using a combination of voice guidance and a voice recognition functions. However, in the image forming apparatus of the related art, it is required to perform an operation instruction by sequentially uttering a voice command according to the voice guidance, and further, in some cases, it is impossible to perform the operation depending on erroneous recognition of the voice recognition function. Accordingly, in the image forming apparatus of the related art, the convenience thereof may sometimes deteriorate.

### SUMMARY OF THE INVENTION

One of the objects of the present intention is to improve prior art techniques and overcome at least some of the prior art problems as for instance above illustrated.

According to a first aspect of the present invention, it is provided an image forming apparatus, comprising a voice input unit configured to receive a voice command uttered by a user; and a control unit configured to convert the voice command received by the voice input unit into text data by voice recognition, and to control execution of a plurality of jobs based upon the text data and a single keyword, which are registered in advance, designating the plurality of jobs which are a combination of single jobs to be executed by the image forming apparatus.

Optionally, the apparatus according to the first aspect of the invention further comprises a voice output unit configured to perform an output by a voice, wherein the control unit causes the voice output unit to output a description of the plurality of jobs by the voice before or during the execution of the plurality of jobs.

Optionally, in the apparatus according to the first aspect of the invention, when a plurality of voice commands are consecutively received by the voice input unit in a short period of time, the control unit consecutively executes each of a plurality of jobs corresponding to each of a plurality of keywords specified by each of a plurality of text data obtained from the plurality of voice commands.

Optionally, in the apparatus according to the first aspect of the invention, when a keyword that corresponds with the text data is not stored in the image forming apparatus, the control unit inquires a plurality of jobs corresponding to the keyword that corresponds with the text data from another image forming apparatus connected to the image forming apparatus.

Optionally, in the apparatus according to the first aspect of the invention, when the keyword that corresponds with the text data is stored in another image forming apparatus, the control unit acquires contents of the plurality of jobs corresponding to the keyword from the another image forming apparatus and executes the acquired plurality of jobs.

Optionally, in the apparatus according to the first aspect of the invention, the control unit transmits the keyword and a plurality of jobs associated with the keyword stored in the image forming apparatus with respect to another image forming apparatus connected to the image forming apparatus to another image forming apparatus at a point of time when the keyword is set or at a predetermined time.

Optionally, in the apparatus according to the first aspect of the invention, the control unit learns a job execution history of the user and performs guidance urging registration of a combination of the plurality of jobs to the voice output unit.

Optionally, in the apparatus according to the first aspect of the invention, the control unit registers the keyword and a plurality of jobs associated with the keyword for each user.

Optionally, in the apparatus according to the first aspect of the invention, when storing a keyword similar to the text data, the control unit executes a plurality of jobs corresponding to the similar keyword by indicating or interpolating the similar keyword.

Optionally, in the apparatus according to the first aspect of the invention, the single keyword registered in advance is one or more of "fax", "copy", "scan", and "print".

According to a second aspect of the invention, it is provided a job execution method, comprising receiving a voice command uttered by a user; converting the received voice command into text data by voice recognition; controlling execution of a plurality of jobs based upon the text data and a single keyword, which are registered in advance, designating the plurality of jobs which are a combination of single jobs to be executed by an image forming apparatus; and executing a plurality of jobs by acquiring contents of the plurality of jobs corresponding to a keyword that corresponds with the text data from another image forming apparatus connected to the image forming apparatus when the keyword that corresponds with the text data is not stored in the image forming apparatus.

Optionally, the method according to the second aspect of the invention further comprises performing an output by a voice; and outputting a description of the plurality of jobs by the voice before or during the execution of the plurality of jobs.

Optionally, the method according to the second aspect of the invention further comprises consecutively receiving a plurality of voice commands in a short period of time; and consecutively executing each of a plurality of jobs corresponding to each of a plurality of keywords specified by each of a plurality of text data obtained from the plurality of voice commands.

Optionally, the method according to the second aspect of the invention further comprises when a keyword that corresponds with the text data is not stored in the image forming apparatus, inquiring a plurality of jobs corresponding to the keyword that corresponds with the text data from another image forming apparatus connected to the image forming apparatus.

Optionally, the method according to the second aspect of the invention further comprises when the keyword that corresponds with the text data is stored in another image forming apparatus, acquiring contents of the plurality of jobs corresponding to the keyword from the another image forming apparatus and executing the acquired plurality of jobs.

Optionally, the method according to the second aspect of the invention further comprises transmitting the keyword and a plurality of jobs associated with the keyword stored in the image forming apparatus with respect to another image forming apparatus connected to the image forming apparatus to another image forming apparatus at a point of time when the keyword is set or at a predetermined time.

Optionally, the method according to the second aspect of the invention further comprises learning a job execution history of the user and performing guidance urging registration of a combination of the plurality of jobs.

Optionally, the method according to the second aspect of the invention further comprises registering the keyword and a plurality of jobs associated with the keyword for each user.

Optionally, the method according to the second aspect of the invention further comprises when storing a keyword similar to the text data, executing a plurality of jobs corresponding to the similar keyword by indicating or interpolating the similar keyword.

Optionally, in the method according to the second aspect of the invention, the voice command is one or more of "fax", "copy", "scan", and "print".

### DESCRIPTION OF THE DRAWINGS

FIG. 1 is an external view illustrating an overall configuration example of an image forming apparatus according to a first embodiment;
FIG. 2 is a block diagram illustrating a hardware configuration of the image forming apparatus;
FIG. 3 is a diagram illustrating an example of a job setting table;
FIG. 4 is a flowchart illustrating a flow of the job setting process;
FIG. 5 is a flowchart illustrating a flow of a process by voice recognition;
FIG. 6 is a diagram illustrating a configuration of a system according to a second embodiment;
FIG. 7 is a block diagram illustrating a hardware configuration of an image forming apparatus; and
FIG. 8 is a sequence diagram illustrating a process flow of the system.

### DETAILED DESCRIPTION

According to one embodiment, an image forming apparatus includes a voice input unit and a control unit. The voice input unit inputs a voice uttered by a user. The control unit converts the voice inputted via the voice input unit into text data by voice recognition, and controls the execution of a plurality of jobs based upon the text data and a single keyword, which is registered in advance, designating the plurality of jobs which are a combination of single jobs to be executed by an image forming apparatus.

Hereinafter, an image forming apparatus and a job execution method according to an embodiment will be described with reference to the accompanying drawings.

### First Embodiment

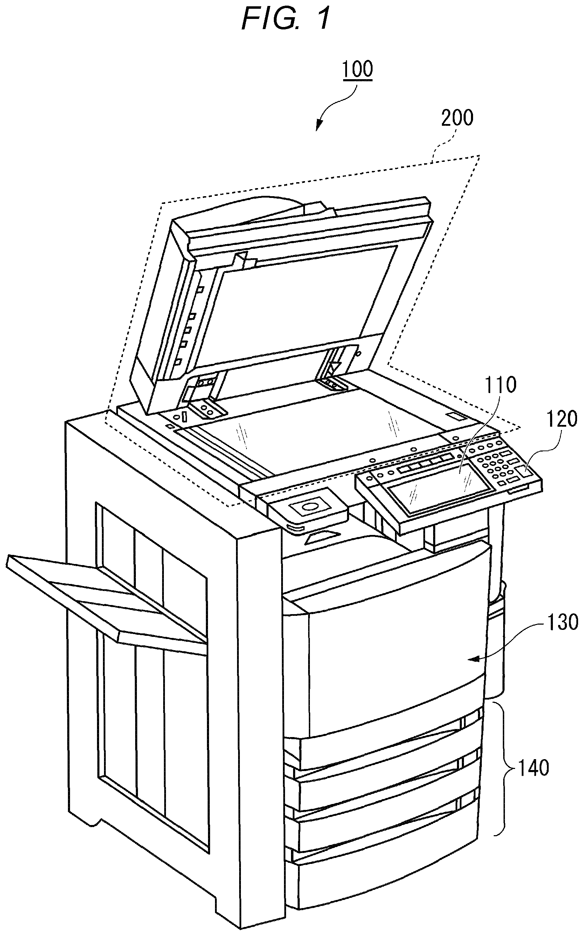

FIG. 1 is an external view illustrating an overall configuration example of an image forming apparatus 100 according to a first embodiment. The image forming apparatus 100 according to the embodiment is a multifunction machine capable of forming a toner image on a sheet. The sheet is, for example, paper, and the like on which an original document, a character, an image, and the like are described. The sheet may be any object as long as the object can be read by the image forming apparatus 100. The image forming apparatus 100 reads an image displayed on the sheet and generates digital data, thereby generating image information.

Further, the image forming apparatus 100 includes a voice recognition function. The image forming apparatus 100 stores a keyword registered in advance and a series of jobs associated with the keyword, and executes a series of jobs associated with a keyword uttered by a user. The keyword is information for identifying the series of jobs to be executed and is registered by user's operation. It is desirable that the keyword is a short and simple term which is easy to be recognized by a user in association with the series of jobs.

Further, the series of jobs is a combination of a plurality of single jobs. The series of jobs is, for example, a combination of a job for scanning and a job to transmit scanned image data by FAX. Further, the series of jobs is a combination of the job for the scanning and a job to print the scanned image data as another example. Further, the series of jobs is not limited to the above-mentioned examples and may be combined in any way as long as the series of jobs is a combination of single jobs which can be executed by the image forming apparatus.

Accordingly, the image forming apparatus 100 does not execute one job associated with one keyword, but executes a plurality of jobs associated with one keyword.

The image forming apparatus 100 includes a display 110, a control panel 120, a printer unit 130, a sheet storage unit 140, and an image reading unit 200. Further, the printer unit 130 of the image forming apparatus 100 is an apparatus for fixing a toner image.

The display 110 is an image display apparatus such as a liquid crystal display and an organic EL (Electro Luminescence) display, and the like. The display 110 displays various types of information related to the image forming apparatus 100. Further, the display 110 outputs a signal corresponding to an operation performed by a user to a CPU (Central Processing Unit) of the image forming apparatus 100. Further, the display 110 receives the operation of the user.

The control panel 120 includes a plurality of buttons. The control panel 120 receives user's operation. The control panel 120 outputs the signal corresponding to the operation performed by the user to the CPU of the image forming apparatus 100. Further, the display 110 and the control panel 120 may be configured as an integrated touch panel.

The printer unit 130 forms an image . In the image forming process, the printer unit 130 forms an image on the sheet based upon the image information generated by the image reading unit 200 or the image information received via a communication path.

The sheet storage unit 140 stores a sheet to be used for image formation in the printer unit 130.

The image reading unit 200 reads an image which is an object to be read as light and darkness of light. For example, the image reading unit 200 reads an image printed on the sheet, which is an object to be read, set on an original document reading table. The image reading unit 200 records the read image information. The recorded image information may be transmitted to another information processing apparatus via a network. The recorded image information may be formed as an image on the sheet by the printer unit 130.

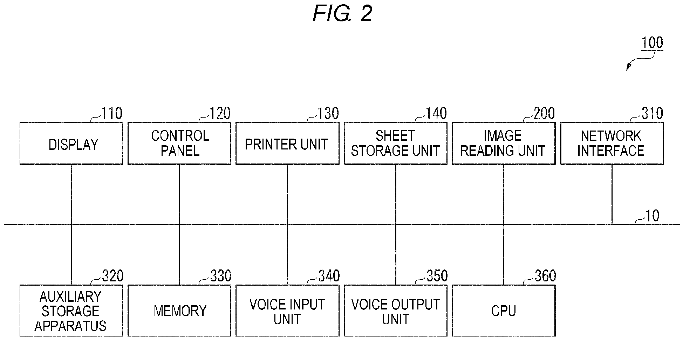

FIG. 2 is a block diagram illustrating a hardware configuration of the image forming apparatus 100 according to the first embodiment.

The image forming apparatus 100 is provided with the display 110, the control panel 120, the printer unit 130, the sheet storage unit 140, the image reading unit 200, a network interface 310, an auxiliary storage apparatus 320, a memory 330, a voice input unit 340, a voice output unit 350, and a CPU 360. Further, since the display 110, the control panel 120, the printer unit 130, the sheet storage unit 140, and the image reading unit 200 are described above, descriptions thereof will be omitted. Hereinafter, the network interface 310, the auxiliary storage apparatus 320, the memory 330, the voice input unit 340, the voice output unit 350, and the CPU 360 will be described. Further, respective function units are connected to each other so as to execute data communication via a system bus 10.

The network interface 310 transmits and receives data to and from another apparatus. Here, another apparatus is, for example, an information processing apparatus such as another image forming apparatus 100 or a personal computer, and the like. The network interface 310 operates as an input interface and receives data or an instruction transmitted from another apparatus. As the instruction transmitted from another apparatus, an instruction to execute printing, an instruction to store image information, and the like are included. Further, the network interface 310 operates as an output interface and transmits the data to another apparatus.

The auxiliary storage apparatus 320 is, for example, a hard disk or an SSD (Solid State Drive) and stores various data. The various data are, for example, digital data, a job, a job log, and a job setting table. The job setting table is a table in which a series of jobs is registered in association with keywords.

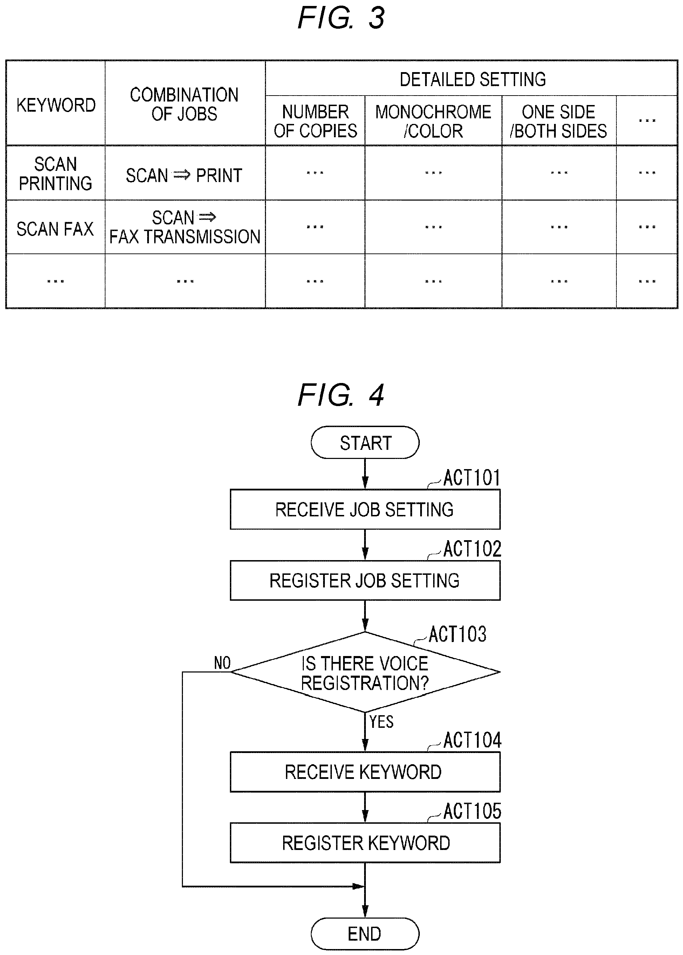

FIG. 3 is a diagram illustrating an example of a job setting table according to the first embodiment.

The job setting table includes a plurality of records representing jobs which are associated with keywords and are related to a series of processes. The record includes each value of a keyword, a job, and detailed setting. The value of the keyword is information for identifying a job to be executed. The keyword is a term to be compared with a result of the voice recognition. The values of the series of jobs are a combination of a plurality of jobs to be executed by the image forming apparatus 100. In FIG. 3, "scan ⇒ print" and "scan ⇒ fax transmission" are shown as the series of jobs. The job of "scan ⇒ print" is a job of scanning the image formed on the sheet and then printing the scanned image information. The job of "scan ⇒ FAX transmission" is a job of scanning the image formed on the sheet and then transmitting the scanned image information by FAX. The value of the detailed setting is a detail of a setting content set when the series of jobs is executed.

In the example illustrated in FIG. 3, the number of copies, monochrome/color, and one side/both sides are illustrated as the detailed setting. Further, the content of the detailed setting is not limited to the example illustrated in FIG. 3. For example, the content of the detailed setting may include a printing method (for example, normal printing, trial printing, and the like), a paper size, an original document direction, a paper feed tray, a paper type, a resolution, and an address of a FAX transmission destination, and the like.

Referring back to FIG. 2, the description will continue.

The memory 330 temporarily stores data used by each function unit provided in the image forming apparatus 100. The memory 330 is, for example, a RAM (Random Access Memory). Further, the memory 330 may store digital data generated by the image reading unit 200. The memory 330 may temporarily store any one of the job, the job log, and the job setting table.

The voice input unit 340 inputs a voice uttered by a user. The voice input unit 340 is, for example, a microphone.

The voice output unit 350 outputs a voice according to the control of the CPU 360. Specifically, the voice output unit 350 executes a voice output such as an output of a voice guide urging the user to perform an operation and an output of an error message, and the like. The voice output unit 350 is, for example, a speaker.

The CPU 360 controls the operation of each function unit of the image forming apparatus 100. The CPU 360 executes various kinds of processes by executing a program stored in the ROM (Read Only Memory) which is not illustrated. Here, one example with respect to a specific process of the CPU 360 will be described. The CPU 360 converts a voice inputted via the voice input unit 340 into text data by a voice recognition technology. The CPU 360 collates the text data with the keyword registered in the job setting table. The CPU 360 executes a series of jobs associated with the keyword when the text data coincide with the keyword.

On the other hand, when the text data do not coincide with the keyword, the CPU 360 controls the voice output unit 350, thereby outputting the error message.

FIG. 4 is a flowchart illustrating a flow of a job setting process according to the first embodiment.

The CPU 360 receives an input of job setting (ACT 101) . Specifically, the user operates the control panel 120, thereby inputting an input instruction of the job setting. The control panel 120 outputs the inputted instruction to the CPU 360. The CPU 360 analyzes a content of the instruction outputted from the control panel 120. As a result of the analysis, when the content of the instruction is the input instruction of the job setting, the CPU 360 generates input screen data for urging the input of the job setting. The input screen data are provided with a region for selecting whether or not to perform an operation by the voice in addition to a region for inputting the job setting. Then, the CPU 360 receives the input of the job setting by displaying the generated input screen data on the display 110.

The user inputs a combination of jobs the user himself or herself is desired to set on an input screen displayed on the display 110. The job may be inputted by the control panel 120 or selected by displaying the type of the job on the display 110. It is desirable that the user inputs a job which is regularly used or generally used with high frequency. Here, it is assumed that the scanning and the printing are inputted as a series of jobs by the user.

Thereafter, the CPU 360 registers the inputted scanning and printing in the job setting table as the series of jobs (ACT 102) . Specifically, the CPU 360 registers a combination of scanning and printing jobs in a job item of the job setting table. Further, the CPU 360 registers the plurality of jobs in the order inputted by the user. Further, when the job is inputted by the user up to the detailed setting at the time of inputting the job, the CPU 360 registers the inputted content in an item of the detailed setting of the job setting table.

Next, the CPU 360 determines whether or not to perform an operation by a voice (ACT 103). When the operation by the voice is not selected to be performed on the input screen (ACT 103: NO), the image forming apparatus 100 terminates the process of FIG. 4.

On the other hand, when the operation by the voice is selected to be performed (ACT 103: YES), the CPU 360 receives an input of a keyword which is associated with a series of registered jobs (ACT 104). Specifically, the CPU 360 generates keyword input screen data urging the input of the keyword. The keyword input screen data are provided with a region for inputting the keyword. Further, the keyword input screen data may be further provided with a region for displaying the series of jobs which becomes an object to be associated with the keyword. Then, the CPU 360 receives the input of the keyword by displaying the generated keyword input screen data on the display 110.

The user inputs a keyword the user himself or herself is desired to set on the keyword input screen displayed on the display 110. The keyword may be inputted by the control panel 120 or by the display 110. Here, it is assumed that scan printing is inputted as the keyword by the user.

Thereafter, the CPU 360 registers the inputted keyword in the job setting table (ACT 105). Specifically, first, the CPU 360 selects a record in which a job which becomes an object to be associated with the keyword among records of the job setting table is registered. Next, the CPU 360 registers the scan printing in an item of the keyword of the selected record.

According to the above-mentioned process, the image forming apparatus 100 causes a series of jobs and a keyword to be associated with each other and then registers the keyword in the job setting table.

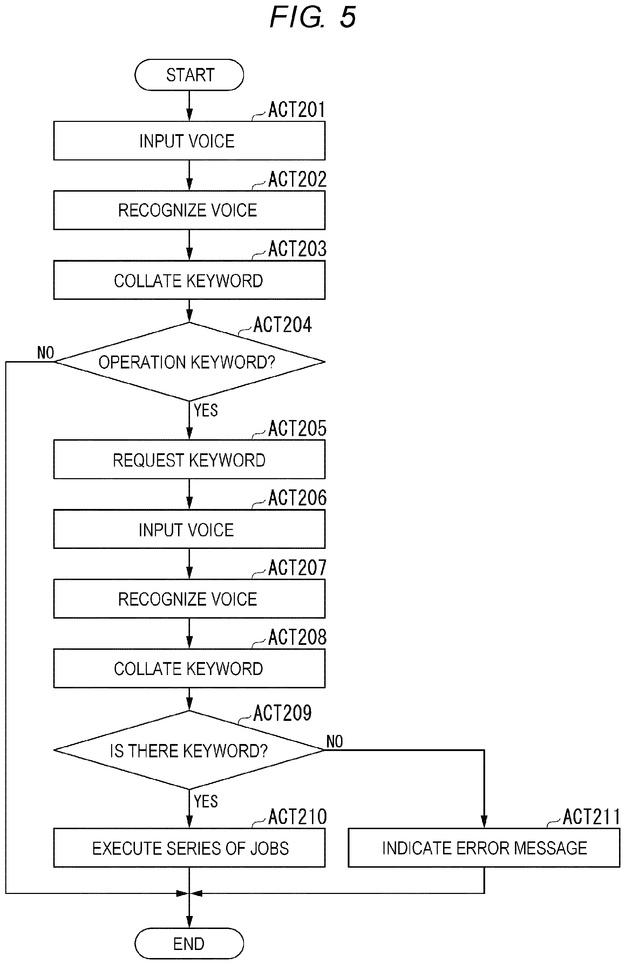

FIG. 5 is a flowchart illustrating a flow of a process by voice recognition according to the first embodiment. Further, at the time of describing FIG. 5, it is assumed that the job setting table illustrated in FIG. 3 is stored in the auxiliary storage apparatus 320.

The voice input unit 340 inputs a voice uttered by a user (ACT 201) . The voice input unit 340 outputs an inputted voice signal to the CPU 360. The CPU 360 executes voice recognition on the inputted voice signal by the voice recognition function and then converts the inputted voice signal into text data (ACT 202) . The CPU 360 collates the text data with a keyword stored in the auxiliary storage apparatus 320 (ACT 203) . The CPU 360 determines whether or not the text data coincide with the keyword (hereinafter referred to as an "operation keyword") indicating that an operation by a voice is executed (ACT 204) .

When the text data do not coincide with the operation keyword (ACT 204: NO), the image forming apparatus 100 terminates the process in FIG. 5.

On the other hand, when the text data coincide with the operation keyword (ACT 204: YES), the CPU 360 controls the voice output unit 350, thereby requesting utterance of the keyword by the voice (ACT 205). The voice output unit 350 outputs a voice guide requesting the utterance of the keyword by the voice according to the control of the CPU 360. Accordingly, a user who operates the image forming apparatus 100 utters a keyword corresponding to a series of jobs to be executed by the image forming apparatus 100 according to the voice guide. Here, it is assumed that the user utters the "scan printing".

The voice input unit 340 inputs the voice uttered by the user (ACT 206). The voice input unit 340 outputs an inputted voice signal to the CPU 360. The CPU 360 executes voice recognition on the inputted voice signal by the voice recognition function and converts the inputted voice signal into text data (ACT 207).

The CPU 360 collates the text data with the keyword stored in the auxiliary storage apparatus 320 (ACT 208). Next, the CPU 360 determines whether or not the text data coincide with the keyword registered in the job setting table (ACT 209). That is, the CPU 360 determines whether or not the keyword that coincides with the text data is registered in the job setting table.

Specifically, first, the CPU 360 reads the job setting table stored in the auxiliary storage apparatus 320. Next, the CPU 360 refers to an item of a keyword of the read job setting table and retrieves whether or not a keyword corresponding to the text data exists. When there is the keyword corresponding to the text data, the CPU 360 determines that the keyword that coincides with the text data is registered in the job setting table. When there is no keyword corresponding to the text data, the CPU 360 determines that the keyword that coincides with the text data is not registered in the job setting table.

When the keyword that coincides with the text data is registered in the job setting table (ACT 209: YES), the CPU 360 executes a process of ACT 210. Specifically, the CPU 360 executes a job that is associated with the keyword that coincides with the text data (ACT 210). For example, when the user utters the "scan printing", the CPU 360 acquires the text data indicating the "scan printing" by the voice recognition function. In this case, the CPU 360 executes a series of jobs "scan ⇒ print" associated with the keyword "scan printing".

Further, the CPU 360 may control the voice output unit 350 so as to output a content of the job to be executed from now on by a voice at the timing before the job is executed or while the job is executed. In this case, the CPU 360 outputs an instruction for outputting the content of the job to be executed from now on by the voice to the voice output unit 350 at the timing before the job is executed or while the job is executed. The instruction for outputting the content of the job by the voice includes the content of the job to be executed from now on. The voice output unit 350 outputs the contents of a series of jobs included in the instruction outputted from the CPU 360 by the voice.

After executing the series of jobs, the CPU 360 terminates the process of FIG. 5.

On the other hand, when the keyword that coincides with the text data is not registered in the job setting table (ACT 209: NO), the CPU 360 executes the process of ACT 211. Specifically, the CPU 360 controls the voice output unit 350, thereby outputting a fact that there exists no series of jobs associated with the uttered keyword by the voice as an error message. The voice output unit 350 outputs the fact that there exists no series of jobs associated with the uttered keyword by the voice according to the control of the CPU 360.

According to the image forming apparatus 100 configured as described above, a plurality of single jobs are combined with each other and registered as the series of jobs in association with the keyword. The image forming apparatus 100 executes the series of jobs associated with the keyword when the text data obtained by the voice recognition coincide with the keyword. The keyword is a short and simple term that is easy for a user to remember. Thus, the user can execute various kinds of jobs of the image forming apparatus that the user is desired to use only by uttering the short keyword. Therefore, operability can be significantly improved. Further, since various kinds of jobs can be executed by the short and simple keyword that is easy to recognize and is associated with the registered job, deterioration of the operability caused by erroneous recognition of the voice recognition function can be dramatically improved.

Hereinafter, a modified example of the image forming apparatus 100 according to the first embodiment will be described.

The image forming apparatus 100 may be configured to confirm the registered content after the registration of the keyword is completed. For example, the CPU 360 may display the registered job, keyword and detailed setting on the display 110 in association with each other, thereby confirming the registered content. Further, for example, the CPU 360 may confirm the registered content by causing the user to utter the registered keyword and confirming whether or not the registered keyword can be recognized.

According to the configurations described above, it is possible to reduce the error of the registered content and the recognition of the keyword at the time of actual use.

The CPU 360 may display guidance urging registration of a job keyword on the display 110 by learning the content of each job instructed by the user. Specifically, the CPU 360 displays a display urging the registration of the job keyword on the display 110 when consecutive jobs having the same pattern are equal to or greater than a threshold value. For example, when a scanning job and a printing job are consecutively executed equal to or greater than the threshold value, the CPU 360 displays the display urging the registration of the job keyword on the display 110.

According to the configuration described above, the registration of a series of jobs frequently used by the user can be encouraged.

Depending on users, many keywords may be registered. In such a case, it is assumed that the keywords of a series of jobs desired to be executed are forgotten. Thus, when an instruction to confirm a keyword is inputted from the user, the CPU 360 may display the content being registered in the job setting table on the display 110. Further, the content being registered in the job setting table may be configured to be confirmed only by a person having specific authority (for example, a manager, a supervisor, and the like) . For example, the CPU 360 may display the content registered in the job setting table on the display 110 only when a specific password is inputted.

Further, it is assumed that text data may not coincide with a keyword, depending on accuracy of the voice recognition. Therefore, when similarity between a character string indicated by the text data and the keyword is equal to or greater than a predetermined threshold, the CPU 360 may perform any one of the following plurality of processes.

As a first process, the CPU 360 executes a series of jobs associated with a keyword whose similarity is equal to or greater than the predetermined threshold.

As a second process, the CPU 360 causes the voice output unit 350 to output the contents of the series of jobs associated with the keyword whose similarity is equal to or greater than the predetermined threshold by a voice.

The image forming apparatus 100 may store a job setting table for each user. That is, the image forming apparatus 100 may store a keyword corresponding to a series of jobs for each user. In the case of the configuration described above, the CPU 360 collates the keyword by using a job setting table of a user authenticated by user authentication.

The image forming apparatus 100 may be configured to consecutively execute a series of jobs associated with respective keywords when the keyword is uttered a plurality of times in a short period. Here, the short period is a predetermined short period from a certain point of time based upon a certain point of time, for example, several seconds or several minutes. Further, the certain point of time may be any timing as long as the certain point of time is a point of time until a series of jobs corresponding to one keyword is terminated. For example, the certain point of time may be a point of time when a voice of one keyword is inputted or may be a point of time when a series of jobs corresponding to one keyword is specified.

As the series of jobs, a combination of a job for reading a sheet in color and a job for printing in monochrome may be registered.

### Second Embodiment

In a second embodiment, an inquiry and a collation of a keyword are performed between a plurality of image forming apparatuses connected to each other via a network.

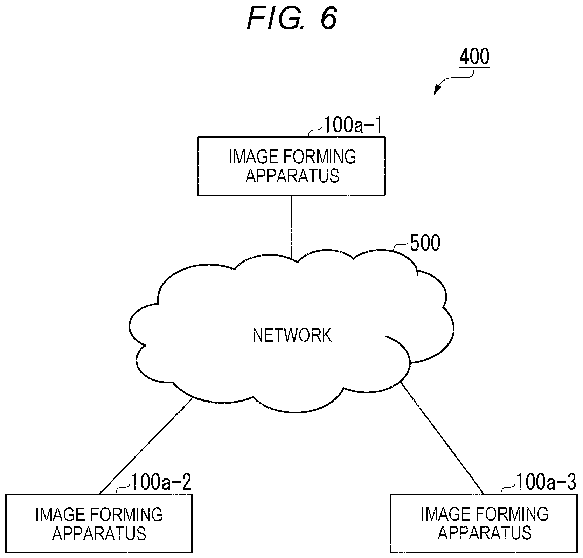

FIG. 6 is a diagram illustrating a configuration of a system 400 according to the second embodiment.

The system 400 is provided with a plurality of image forming apparatuses 100a-1 to 100a-3. Further, the system 400 may be provided with at least two image forming apparatuses 100a, and may be provided with four or more image forming apparatuses 100a. The image forming apparatuses 100a-1 to 100a-3 are communicably connected to each other via a network 500. The network 500 may be a network configured in any way. For example, the network 500 is a network such as a wireless LAN (Local Area Network), the Internet, and the like.

Each of the image forming apparatuses 100a-1 to 100a-3 has a configuration different from that of the image forming apparatus 100 in that the inquiry and the collation of the keyword are performed between the image forming apparatuses 100a. Specifically, first, it is assumed that a keyword uttered by a user is not registered in a certain image forming apparatus 100a (for example, the image forming apparatus 100a-1). In this case, the image forming apparatus 100a-1 inquires the keyword of another image forming apparatus 100a (for example, the image forming apparatuses 100a-2 and 100a-3) . Another image forming apparatus 100a collates the inquired keyword. Next, when the keyword is registered in own apparatus, another image forming apparatus 100a returns the contents of a series of jobs corresponding to the keyword to the image forming apparatus 100a-1.

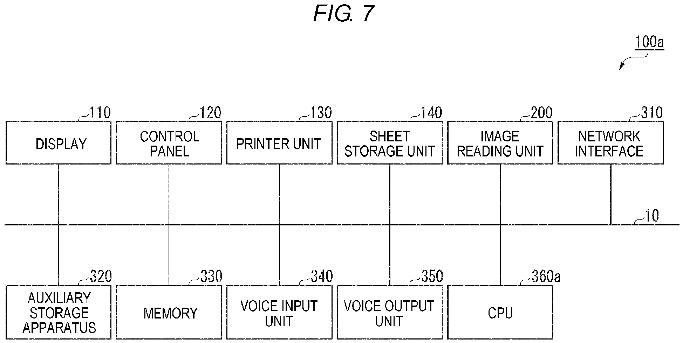

FIG. 7 is a block diagram illustrating a hardware configuration of the image forming apparatus 100a according to the second embodiment. Further, the image forming apparatuses 100a-1 to 100a-3 have the same configuration.

The image forming apparatus 100a is provided with the display 110, the control panel 120, the printer unit 130, the sheet storage unit 140, the image reading unit 200, the network interface 310, the auxiliary storage apparatus 320, the memory 330, the voice input unit 340, the voice output unit 350, and a CPU 360a.

The image forming apparatus 100a has a configuration different from that of the image forming apparatus 100 in that the CPU 360a is provided instead of the CPU 360. Other configurations of the image forming apparatus 100a are the same as those of the image forming apparatus 100. Therefore, the description of the whole image forming apparatus 100a will be omitted, and the CPU 360a will be described.

The CPU 360a controls an operation of each function unit of the image forming apparatus 100a. The CPU 360a executes various kinds of processes by executing a program stored in the ROM which is not illustrated. Here, a point different from the first embodiment will be described with respect to a specific process of the CPU 360a. When a keyword uttered by a user is not registered in the job setting table, the CPU 360a inquires the keyword of another image forming apparatus 100a. The CPU 360a collates the inquired keyword and responds with the contents of a series of jobs corresponding to the keyword when the keyword is registered in own apparatus.

In the following description, in order to respectively discriminate the image forming apparatuses 100a-1 to 100a-3, it is assumed that branch numbers of "-1" and "-2" are attached to reference signs indicating respective internal configurations.

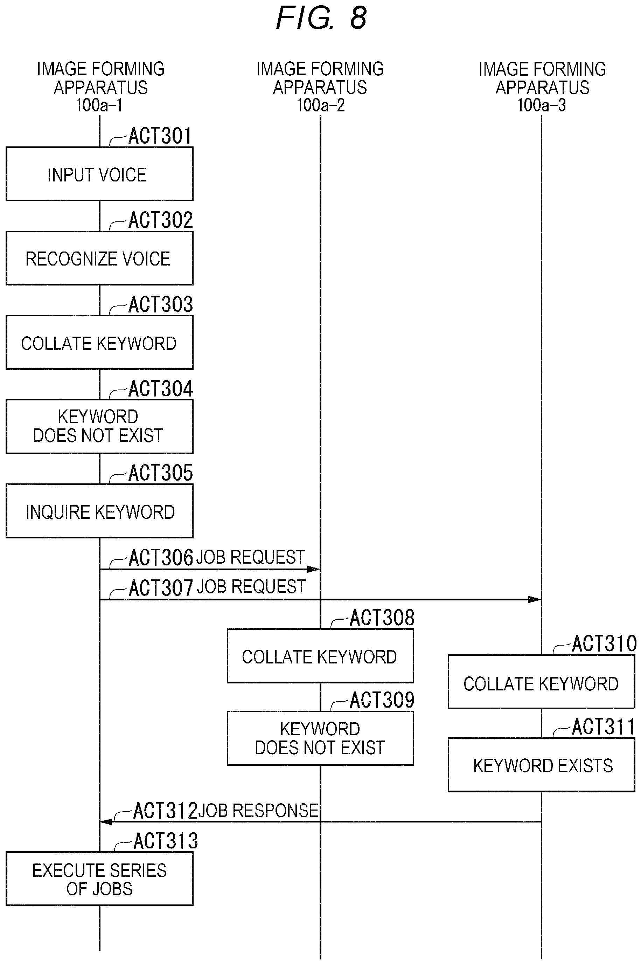

FIG. 8 is a sequence diagram illustrating a flow of a system process according to the second embodiment. Further, in the description of FIG. 8, it is assumed that the process up to ACT 205 of FIG. 5 is completed.

A voice input unit 340-1 of the image forming apparatus 100a-1 inputs a voice uttered by a user (ACT 301). The voice input unit 340-1 outputs an inputted voice signal to the CPU 360a-1. The CPU 360a-1 executes voice recognition on the inputted voice signal by the voice recognition function and converts the inputted voice signal into text data (ACT 302) .

The CPU 360a-1 collates the text data with a keyword stored in an auxiliary storage apparatus 320-1 (ACT 303) . Next, the CPU 360a-1 determines whether or not the text data coincide with the keyword registered in the job setting table. That is, the CPU 360a-1 determines whether or not the keyword that coincides with the text data is registered in the job setting table. In this case, it is assumed that the keyword that coincides with the text data is not registered in the job setting table (ACT 304).

In this case, the CPU 360a-1 inquires the keyword of another image forming apparatus 100a (ACT 305). Specifically, the CPU 360a-1, first, generates a job request including the keyword and an instruction for requesting a content of a job corresponding to the keyword. Next, the CPU 360a-1 transmits the generated job request to another image forming apparatus 100a connected to own apparatus via a network interface 310-1. In the example of FIG. 8, the image forming apparatus 100a-1 transmits the job request to the image forming apparatuses 100a-2 and 100a-3 (ACT 306 and ACT 307).

A network interface 310-2 of the image forming apparatus 100a-2 receives the job request transmitted from the image forming apparatus 100a-1. The network interface 310-2 outputs the received job request to a CPU 360a-2. The CPU 360a-2 collates the text data with a keyword stored in an auxiliary storage apparatus 320-2 (ACT 308). Next, the CPU 360a-2 determines whether or not the text data coincide with the keyword registered in the job setting table. That is, the CPU 360a-2 determines whether or not the keyword that coincides with the text data is registered in the job setting table. In this case, it is assumed that the keyword that coincides with the text data is not registered in the job setting table (ACT 309) .

A network interface 310-3 of the image forming apparatus 100a-3 receives the job request transmitted from the image forming apparatus 100a-1. The network interface 310-3 outputs the received job request to a CPU 360a-3. The CPU 360a-3 collates the text data with a keyword stored in an auxiliary storage apparatus 320-3 (ACT 310). Next, the CPU 360a-3 determines whether or not the text data coincide with the keyword registered in the job setting table. That is, the CPU 360a-3 determines whether or not the keyword that coincides with the text data is registered in the job setting table. Here, it is assumed that the keyword that coincides with the text data is registered in the job setting table (ACT 311).

In this case, the CPU 360a-3 acquires a content of a job associated with the keyword that coincides with the text data. Next, the CPU 360a-3 generates a job response including the acquired content of the job. Next, the CPU 360a-3 transmits the generated job response to the image forming apparatus 100a-1, which is a request source, via the network interface 310-3 (ACT 312).

The network interface 310-1 of the image forming apparatus 100a-1 receives the job response transmitted from the image forming apparatus 100a-3. The network interface 310-1 outputs the received job response to the CPU 360a-1. The CPU 360a-1 executes a series of jobs based upon the content of the job included in the job response (ACT 313).

When a keyword uttered by a user is not registered in own apparatus, the image forming apparatus 100a having the configuration as described above makes an inquiry to another image forming apparatus 100a. Meanwhile, when the keyword is registered in another image forming apparatus 100a, the image forming apparatus 100a acquires contents of a series of jobs from another image forming apparatus 100a. Accordingly, the image forming apparatus 100a can execute a series of jobs corresponding to the keyword even when the keyword is not registered in own apparatus. Thus, convenience can be improved.

Hereinafter, a modified example of the image forming apparatus 100a according to the second embodiment will be described.

The image forming apparatus 100a may be modified in the same manner as that of the first embodiment.

The image forming apparatus 100a may be configured to share a series of job setting tables stored in own apparatus with another image forming apparatus 100a at a predetermined timing. The predetermined timing is, for example, a point of time when a keyword is registered, a predetermined time, or a predetermined period.

In the case of the configuration described above, the image forming apparatus 100a transmits a job setting table stored in the auxiliary storage apparatus 320 to another image forming apparatus 100a at the predetermined timing. The image forming apparatus 100a receiving the job setting table from another image forming apparatus 100a compares the job setting table stored in own apparatus with the received job setting table. Next, the image forming apparatus 100a acquires information not registered in the job setting table stored in own apparatus from the received job setting table. Accordingly, the image forming apparatus 100a newly registers the acquired information in the job setting table stored in own apparatus.

The image forming apparatus 100 according to at least one embodiment described above includes: a voice input unit that inputs a voice uttered by a user; and a control unit that converts the voice inputted via the voice input unit into text data by voice recognition and controls the execution of a plurality of jobs based upon the text data and a single keyword, which is registered in advance, designating the plurality of jobs that are a combination of single jobs to be executed by an image forming apparatus, whereby it is possible to reduce the error of the registered content and the recognition of the keyword at the time of actual use.

A part of functions of the image forming apparatus 100 and the image forming apparatus 100a according to the embodiments described above may be realized by a computer. In this case, a program for realizing this function is recorded on a computer-readable recording medium. Then, the program recorded on the recording medium on which the above-mentioned program is recorded may be realized by being read and executed by a computer system. Further, the term herein "computer system" includes hardware such as an operating system, peripheral equipment, and the like. Further, the "computer-readable recording medium" means a portable medium, a storage apparatus, and the like. The portable medium is a flexible disk, a magneto-optical disk, a ROM, a CD-ROM, and the like. Further, the storage apparatus is a hard disk, and the like incorporated in the computer system. Further, the "computer-readable recording medium" dynamically holds a program for a short time, such as a communication line when the program is transmitted via a communication line. The communication line is a network such as the internet, a telephone line, and the like. Further, the "computer-readable recording medium" may be a volatile memory inside the computer system serving as a server or a client. The volatile memory holds the program for a fixed time. Further, the aforementioned program may be used to realize a part of the aforementioned function. Further, the program may be realized by combining the aforementioned function with a program already recorded in the computer system.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions and their equivalent as defined by the appended claims. The accompanying claims and their equivalents are intended to cover such forms or modifications as would fall within the scope of the inventions.

## Claims

1. An image forming apparatus, comprising:
a voice input unit configured to receive a voice command uttered by a user; and
a control unit configured to convert the voice command received by the voice input unit into text data by voice recognition, and to control execution of a plurality of jobs based upon the text data and a single keyword, which are registered in advance, designating the plurality of jobs which are a combination of single jobs to be executed by the image forming apparatus.

2. The apparatus according to claim 1, further comprising:
a voice output unit configured to perform an output by a voice, wherein
the control unit causes the voice output unit to output a description of the plurality of jobs by the voice before or during the execution of the plurality of jobs.

3. The apparatus according to claim 1 or 2, wherein when a plurality of voice commands are consecutively received by the voice input unit in a short period of time, the control unit consecutively executes each of a plurality of jobs corresponding to each of a plurality of keywords specified by each of a plurality of text data obtained from the plurality of voice commands.

4. The apparatus according to any of claims 1 to 3, wherein
when a keyword that corresponds with the text data is not stored in the image forming apparatus, the control unit inquires a plurality of jobs corresponding to the keyword that corresponds with the text data from another image forming apparatus connected to the image forming apparatus.

5. The apparatus according to claim 4, wherein
when the keyword that corresponds with the text data is stored in another image forming apparatus, the control unit acquires contents of the plurality of jobs corresponding to the keyword from the another image forming apparatus and executes the acquired plurality of jobs.

6. The apparatus according to any of claims 1 to 5, wherein
the control unit transmits the keyword and a plurality of jobs associated with the keyword stored in the image forming apparatus with respect to another image forming apparatus connected to the image forming apparatus to another image forming apparatus at a point of time when the keyword is set or at a predetermined time.

7. The apparatus according to any of claims 2 to 6, wherein
the control unit learns a job execution history of the user and performs guidance urging registration of a combination of the plurality of jobs to the voice output unit.

8. The apparatus according to any of claims 1 to 7, wherein
the control unit registers the keyword and a plurality of jobs associated with the keyword for each user.

9. The apparatus according to any of claims 1 to 8, wherein
when storing a keyword similar to the text data, the control unit executes a plurality of jobs corresponding to the similar keyword by indicating or interpolating the similar keyword.

10. The apparatus according to any of claims 1 to 9, wherein
the single keyword registered in advance is one or more of "fax", "copy", "scan", and "print".

11. A job execution method, comprising:
receiving a voice command uttered by a user;
converting the received voice command into text data by voice recognition;
controlling execution of a plurality of jobs based upon the text data and a single keyword, which are registered in advance, designating the plurality of jobs which are a combination of single jobs to be executed by an image forming apparatus; and
executing a plurality of jobs by acquiring contents of the plurality of jobs corresponding to a keyword that corresponds with the text data from another image forming apparatus connected to the image forming apparatus when the keyword that corresponds with the text data is not stored in the image forming apparatus.

12. The method according to claim 11, further comprising:
performing an output by a voice; and
outputting a description of the plurality of jobs by the voice before or during the execution of the plurality of jobs.

13. The method according to claim 11 or 12, further comprising:
consecutively receiving a plurality of voice commands in a short period of time; and
consecutively executing each of a plurality of jobs corresponding to each of a plurality of keywords specified by each of a plurality of text data obtained from the plurality of voice commands.

14. The method according to any of claims 11 to 14, further comprising:
when a keyword that corresponds with the text data is not stored in the image forming apparatus, inquiring a plurality of jobs corresponding to the keyword that corresponds with the text data from another image forming apparatus connected to the image forming apparatus.

15. The method according to claim 14, further comprising:
when the keyword that corresponds with the text data is stored in another image forming apparatus, acquiring contents of the plurality of jobs corresponding to the keyword from the another image forming apparatus and executing the acquired plurality of jobs.
